# EUROPEAN PATENT APPLICATION

(11) **EP 1 213 079 A2**
(43) Date of publication of application: **12.06.2002**
(21) Application number: 02000718.3
(22) Date of filing: 12.03.1996
(51) Int. Cl.: B23D 47/00

(54) **Circular saw machine**

(30) Priority: 30.06.1995 JP 16496895; 22.09.1995 JP 24485595; 22.09.1995 JP 24485995
(62) Divisional of application: 96103869.2
(71) Applicant: Tsune Seiki Co., Ltd., Nei-gun, Toyama-ken (JP)
(72) Inventor: Tsune, Ryoichi, Toyama-shi, Toyama-ken (JP)
(74) Representative: HOFFMANN - EITLE

(57) **Abstract**

To prevent the circular saw (12) of a sawing machine from vibrating side-ways at the instant that the circular saw (12) contacts a work stock (W), antivibration blocks (53,54,55,56) are arranged to both sides of the circular saw (12) so as to face one another with the circular saw (12) interposed between them. Additionally, to prevent backlash in a multistage saw driving unit (66) at the instant that the circular saw (12) starts to cut the work stock (W) a motion controlling means (65) is provided to prevent back lash between an ultimate stage gear (67) and a penultimate stage gear (68) mating therewith. Further there are coolant mist nozzles (58,59) and fluid nozzles (60) for cooling the circular saw (12) and the work stock (W) and means such that said nozzles can be used selectively.

## Description

### Industrial Field of Application

The present invention relates to a circular saw machine which comprises a main vice mechanism adapted to hold a work stock, especially of metal, at front and rear positions of a crosswise cutting course of a circular saw, and a carrier-combined vice mechanism adapted to hold the work stock and forward it partially over the cutting course of the circular saw.

### Background and Summary of the Invention

In this kind of circular saw machines, there has been the one provided with a spreading (, i.e. gap forming ) mechanism adapted to form a gap between a cut end face of the work stock and a saw blade face. More particularly, the carrier-combined vice mechanism, which is caused to return to a normal back position once by a next predetermined cutting-off length of the work stock and then holds the remaining work stock at the normal back position after a forwarded part of the work stock has been cut off and the main vice mechanism has been loosened for releasing the part, is further retreated backwardly to a predetermined spreading-associated position. In the present application, a terminology " spreading " refers to forming the above-mentioned gap.

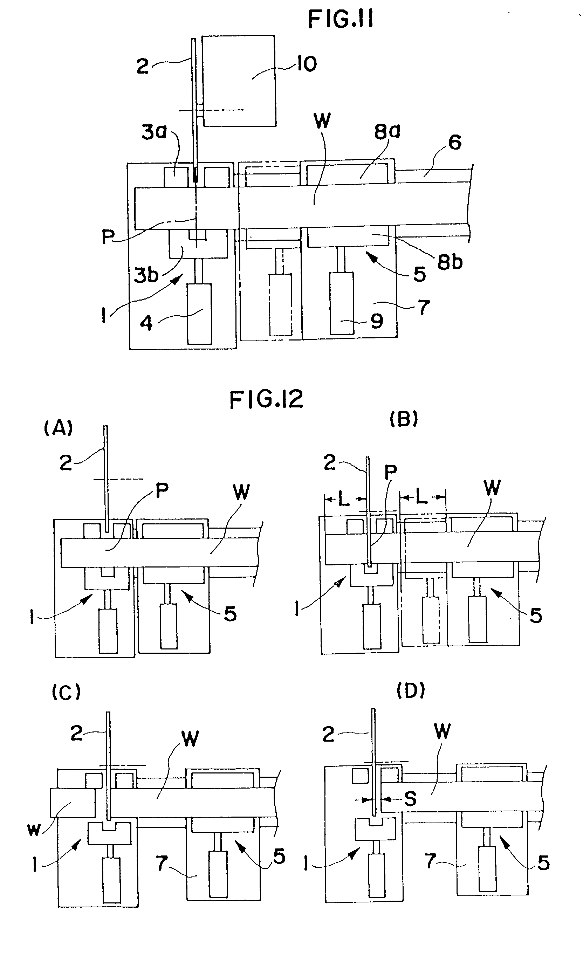

Referring to Fig.11 which schematically shows the conventional circular saw machine provided with the above-mentioned spreading mechanism, the numeral 1 designates a main vice mechanism for holding a work stock W at front and rear positions of a crosswise cutting course of a circular saw 2, which mechanism comprises a fixed vice jaw 3a, a movable vice jaw 3b and a hydraulic cylinder 4 for moving the movable vice jaw 3b relative to the fixed vice jaw 3a. Numeral 5 designates a carrier-combined vice mechanism adapted to hold the work stock W and forward it partially over the cutting course of the circular saw 2, which mechanism is disposed on a platform 7 driven by a ball-screw mechanism (not shown) along a guide rail (not shown) provided on a bench 6. The carrier-combined vice mechanism 5 comprises a fixed vice jaw 8a, a movable vice jaw 8b and a hydraulic cylinder 9 for moving the movable vice jaw 8b relative to the fixed vice jaw 8a. The circular saw 2 is mounted on a saw frame 10 and is adapted to advance toward and recede from a cutting position P.

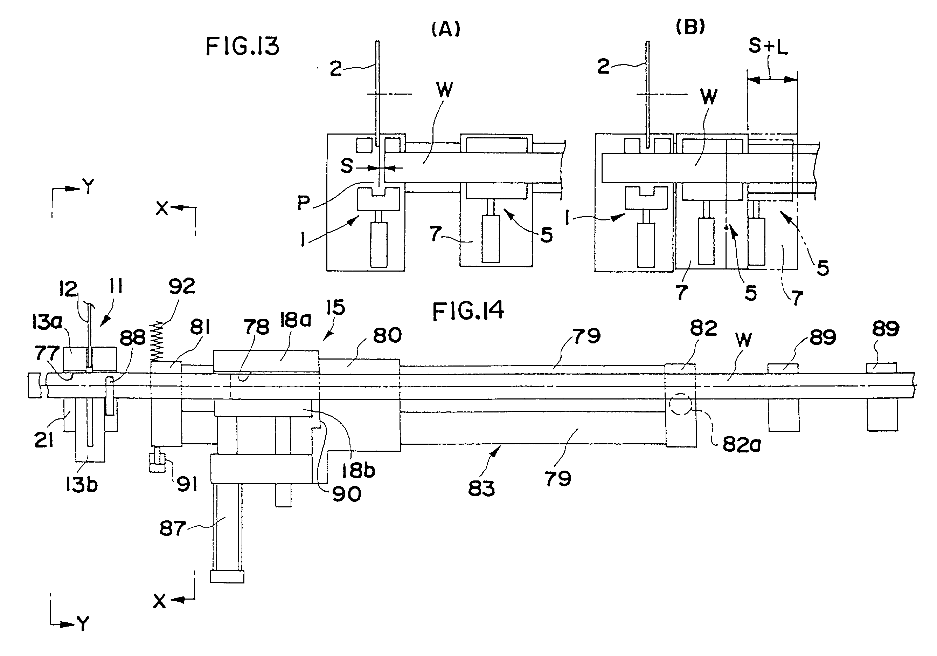

The cutting and spreading operations of the above-mentioned conventional saw machine toward the work stock W are described with reference to Figs.12 and 13. Firstly, as shown in Fig.12(A) and (B), the circular saw 2 is caused to advance in the cutting course through the work stock W and thereby cut off a forwarded part of the work stock W with a predetermined cutting-off length L. While cutting, the carrier-combined vice mechanism 5 is loosened and then returned by the next cutting-off length L of the work stock W to a normal back position, where it is tightened for holding the remaining work stock W and is put in a standby state. Fig.12(B) shows a state in which a forwarded part of the work stock W has been cut off and the carrier-combined vice mechanism 5 is standing by at the normal back position returned by the next cutting-off length L of the work stock W. Next, as shown in Fig. 12(C), the main vice mechanism 1 is loosened, and then the cut part w of the work stock W is duly dispatched, whereas, in a state where the main vice mechanism 1 is kept loose, the carrier-combined vice mechanism 5 holding the work stock W at the normal back position is further retreated slightly to a spreading-associated position by way of the platform 7 of a spreading unit (not shown) so as to form a gap S between a cut end face of the work stock W and a side face of the circular saw 2 as shown in Fig.12(D).

Then, as shown in Fig.13(A), the circular saw 2 is withdrawn from the cutting position P. Next, as shown in Fig.13(B), the carrier-combined vice mechanism 5 is moved forwardly by the total length (S + L), i.e. the gap S plus the cutting-off length L of the work stock W, from the spreading-associated position in preparation for the next cutting operation. Thereafter, a series of operations shown in Fig.12(A) through (D) and Fig.13(A) and (B) are repeated.

In this manner, in the case where the cutting is made using the circular saw 2 whose saw teeth are formed of super-hard tips such as cemented carbide tips, a gap is preferably formed. That is, immediately after finishing cutting the work stock W, a so-called spreading operation is conducted, as described above, between the saw blade face and the cut face touching thereon of the remaining work stock W by retreating the work stock W slightly while the main vice mechanism 1 is kept loose, so that the circular saw 2 is prevented from sliding on the cut face of the work stock W when the saw is withdrawn to a standby position from the cutting position P. As a result, the saw teeth formed of the cemented carbide tips are not worn nor damaged, a lifetime of the saw can be extended, and the deterioration of cutting accuracy due to sliding on the cut face of the work stock can be prevented.

However, the spreading unit of the conventional circular saw machine includes a conveying means for conveying the carrier-combined vice mechanism 5 for which is used either a ball-screw mechanism comprised of ball screws and a servomotor for driving the same, or a rack-pinion mechanism comprised of a rack, a pinion and a servomotor for driving the same, with the arrangement to conduct the spreading operation by electrically controlling such motor driven mechanisms and putting under electric control a tight-loose operating means (hydraulic cylinder) for the main vice mechanism 1, so that there are problems in that the electrical control gets considerably complicated and the production cost is very increased.

To overcome the above-mentioned problems, it is an object of the present invention to provide a circular saw machine having a spreading mechanism which, in place of the conventional electrical control system, uses a hydraulic cylinder as the tight-loose operating means for the main vice mechanism and the conveying means for the carrier-combined vice mechanism, and is arranged to conduct the loosening operation of the main vice mechanism and the spreading operation of the carrier-combined vice mechanism with a hydraulic sequence circuit so as to enable a decrease in the production cost.

With the above object in view, the present invention provide a circular saw machine comprising a circular saw for cutting a work stock crosswise, a main vice mechanism adapted to hold a work stock at front and rear positions relative to a crosswise cutting course of the circular saw, a carrier-combined vice mechanism adapted to hold the work stock and forward the work stock partially over the sawing course of the circular saw, a spreading mechanism adapted to form a gap between a cut end face of the work stock and a saw blade face by retreating further rearwardly to a predetermined spreading-associated position the carrier-combined vice mechanism which is caused to return to a normal back position once by a next predetermined cutting-off length of the work stock and then holds the remaining work stock at the normal back position after a forwarded part of the work stock has been cut off and the main vice mechanism has been loosened for releasing the part, wherein the main vice mechanism is provided with a main vice tight-loose operating hydraulic cylinder and the carrier-combined vice mechanism is provided with a vice tight-loose operating hydraulic cylinder and a conveyance-serving hydraulic cylinder for conveying the carrier-combined vice mechanism between a front position and the normal back position, wherein the spreading mechanism comprises a swing lever pivoted swingably to a fixed position, a stopper which is provided on a front face of the swing lever at an interior one end relative to a swinging fulcrum so as to restrict the carrier-combined vice mechanism to the normal back position, a spring for supporting the front face side of the swing lever on the other interior end so as to keep the stopper at a predetermined restricting position, and a spreading hydraulic cylinder adapted to swing and displace the stopper further rearwardly in the returning direction of the carrier-combined vice mechanism by pushing the exterior end of the swing lever against the spring force of the spring, wherein the spreading mechanism includes a first pipe line connected between a main vice loosening-assistant side chamber of the main vice tight-loose operating hydraulic cylinder and a lever pushing-assistant side chamber of the spreading hydraulic cylinder, a second pipe line branched from the first pipe line, a third pipe line connected with the main vice closing-assistant side chamber of the main vice tight-loose operating hydraulic cylinder, and the second and third pipe lines being selectively connected to an oil pressure source and a tank by means of a switch valve interposed between the second and third pipe lines.

Other objects of the present invention will become apparent from the following detailed description of the embodiments.

### Brief Description of the Drawings

Fig.1 is a plan view showing one embodiment of a circular saw machine according to the present invention;
Fig.2 is a hydraulic circuit diagram of a spreading mechanism provided in the circular saw machine shown in Fig.1;
Fig.3 is a plan view showing another embodiment of a circular saw machine of the present invention;
Fig.4 is a side view of the circular saw machine shown in Fig.3, showing a state where a cover plate of a saw frame is closed;
Fig. 5 is a side view of the circular saw machine similar to Fig.4, showing a state where the cover plate is opened;
Fig.6 is a longitudinal sectional view showing circular saw anti-vibration means;
Fig.7 is a longitudinal sectional view showing motion controlling means;
Fig.8 is a plan view of a still further embodiment of a circular saw machine according to the present invention, showing that a guide frame is put in a neutral position;
Fig.9 is a plan view similar to Fig.8, showing that the guide frame is put in a first displacement position;
Fig.10 is a plan view similar to Fig.8, showing that the guide frame is put in a second displacement position;
Fig.11 is a plan view showing a conventional circular saw machine;
Fig.12(A) to (D) are explanatory views for showing the cutting and spreading operations of the conventional circular saw machine;
Fig.13(A) and (B) are explanatory views for showing the cutting and spreading operations of the conventional circular saw machine, following the operations in Fig.12;
Fig.14 is a plan view showing a conventional circular saw machine;
Fig.15 is a side view of the circular saw machine shown in Fig.14;
Fig.16 is a plan view similar to Fig.14;
Fig.17 is a plan view similar to Fig.14;
Fig.18 is a sectional view taken along a line X-X in Fig.14;
Fig.19 is a sectional view taken along a line Y-Y in Fig.14; and
Fig.20 is an explanatory view for showing a state where a forwarded part of a work stock is bent.

### Detailed Description of the Preferred Embodiments

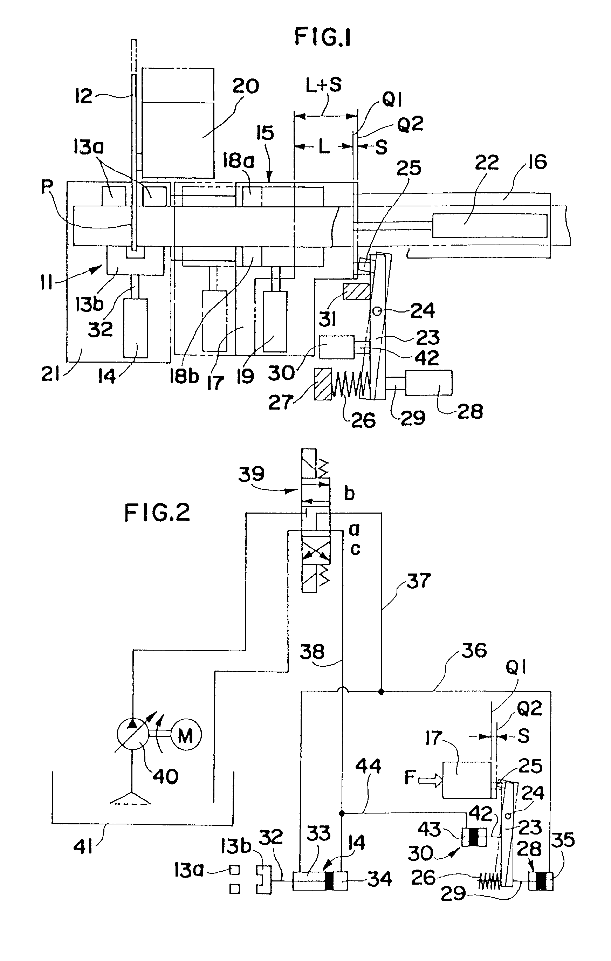

Referring to Figs. 1 and 2 which shows the first embodiment of a circular saw machine having a spreading mechanism according to the present invention, the numeral 11 in Fig.1 designates a main vice mechanism for holding a work stock W at front and rear positions of a crosswise cutting course of a circular saw 12, which mechanism is disposed on a base 21 and comprises a fixed vice jaw 13a, a movable vice jaw 13b and a main vice tight-loose operating hydraulic cylinder 14 for moving the movable vice jaw 13b relative to the fixed vice jaw 13a. Numeral 15 designates a carrier-combined vice mechanism adapted to hold the work stock W and forward it partially over the cutting course of the circular saw, which mechanism comprises a fixed vice jaw 18a, a movable vice jaw 18b and a vice tight-loose operating hydraulic cylinder 19 for moving the movable vice jaw 18b relative to the fixed vice jaw 18a, and is disposed fixedly on a platform 17 adapted to be conveyed by a conveyance-serving hydraulic cylinder 22 along a guide rail (not shown) provided on a bench 16. The circular saw 12 is mounted on a saw frame 20 and is adapted to advance toward and recede from a cutting position P.

In Fig.1, numeral 23 designates a swing lever pivoted at a fixed position in the saw machine by a pivot 24, of which interior end of the swing lever 23 in reference to the pivot 24 (swinging fulcrum) is provided with a stopper 25 for restricting the carrier-combined vice mechanism 15 to a normal back position Q1. The stopper 25 is fixed on a front face of the interior end portion of the swing lever 23. The normal back position Q1 of the carrier-combined vice mechanism 15 is represented by a rear end face of the returned platform 17, as shown by a solid line in the Fig.1. Numeral 26 designates a spring for supporting a front face side of the other interior end portion of the swing lever 23 so as to keep the stopper 25 at a predetermined restricting position (a position where the stopper 25 comes into contact with a rear end face of the platform 17 at the normal back position of the carrier-combined vice mechanism 15). The spring 26 is secured to a fixing member 27 and has a spring force capable of supporting the exterior end of the swing lever 23 such that, when the carrier-combined vice mechanism 15 is returned by the drive-operating hydraulic cylinder 22, a moment on the exterior end side of the swing lever 23 generated by the spring 26 is relatively larger than a moment on the interior end side generated by a pressing force F ( see Fig.1) applied to the stopper 25 touching upon the rear end of the platform 17.

At the rear of the exterior end of the swing lever 23, a spreading hydraulic cylinder 28 is disposed in alignment with the spring 26. The spreading hydraulic cylinder 28 conducts the spreading operation with an arrangement to push the exterior end of the swing lever 23 against the spring force of the spring 26 and thereby swing and displace the stopper 25 further rearwardly in the returning direction of the carrier-combined vice mechanism 15 as shown by a virtual line. A piston rod 29 of the cylinder 28 is arranged to come into contact with a rear face of the exterior end of the swing lever 23. In Fig.1, numeral 30 designates a spring-assistant hydraulic cylinder for supporting the exterior end of the swing lever 23 so as to retain the stopper 25 at a predetermined restricting position as shown by a solid line, in cooperation with the spring 26, when the spreading-operating hydraulic cylinder 28 is inactive. A position of the swing lever 23 is restricted by a restricting member 31 such that the stopper 25 on the lever is not swung and displaced forwardly beyond the normal back position Q1 of the carrier-combined vice mechanism 15.

Next, referring to Fig.2 showing a hydraulic control circuit of the spreading mechanism, the main vice tight-loose operating hydraulic cylinder 14 of the main vice mechanism 11 has its piston rod 32 interconnected with the movable vice jaw 13b, whereby, when a pressure oil is supplied to a rod accommodating side chamber 33 (main vice loosening-assistant side chamber), the movable ice jaw 13b goes away from the fixed vice jaw 13a so as to bring a main vice into a loose state, and, reversely, when the pressure oil is supplied to a head adjacent side chamber 34 (main vice tightening-assistant side chamber), the movable vice jaw 13b approaches to the fixed vice jaw 13a to bring the main vice into a tight state. On the other hand, in the spreading-operating hydraulic cylinder 28, the pressure oil is supplied only to a head side chamber 35 (lever pushing-assistant side chamber) for spreading operation. However, when the pressure oil is discharged, the piston returns to an original position by a biasing force of the spring 26.

In this manner, a first pipe line 36 is connected between the rod accommodating side chamber (main vice loosening-assistant side chamber) 33 of the main vice tight-loose operating hydraulic cylinder 14 and the head side chamber (lever pushing-assistant side chamber) 35 of the spreading hydraulic cylinder 28. A second pipe line 37, branched from the first pipe line 36, and a third pipe line 38, connected with the head side chamber (main vice closing-assistant side chamber) 34 of the main vice tight-loose operating hydraulic cylinder 14, are selectively connected to an oil pressure source 40 and a tank 41 by means of a switch valve 39 interposed between the pipe lines 37 and 38.

The spring-assistant hydraulic cylinder 30 has a piston rod 42 for supporting the swing lever 23, wherein a head side chamber 43 (lever pushing-assistant side chamber) of the cylinder 30 is connected to the third pipe line 38 via a fourth pipe line 44. When the pressure oil is supplied to the head side chamber 43 of the spring-assistant hydraulic cylinder 30, the piston rod 42 projects outwardly and support the swing lever 23, in cooperation with the spring 26, at a predetermined position (,i.e. a position of the stopper 25 meeting the normal back position Q1 of the carrier-combined vice mechanism 15).

In the above-described hydraulic control circuit, when the switch valve 39 is shifted from a neutral position to a position b, the pressure oil from the oil pressure source 40 is supplied to the rod accommodating side chamber 33 (main vice loosening-assistant side chamber) of the main vice tight-loose operating hydraulic cylinder 14 and the head side chamber 35 (lever pushing-assistant side chamber) of the spreading hydraulic cylinder 28, through the second pipe line 37 and the first pipe line 36. In this manner, the main vice tight-loose operating hydraulic cylinder 14 is actuated firstly and loosens the main vice mechanism 11 because the piston rod 29 of the spreading hydraulic cylinder 28 is subjected to the pushing force of the spring 26 through the end portion of the swing lever 23. When an oil pressure in the head side chamber (lever pushing-assistant side chamber) 35 of the spreading hydraulic cylinder 28 becomes larger than the pushing force of the spring 26 after the piston of the main vice tight-loose operating hydraulic cylinder 14 has reached a stroke end, the spreading hydraulic cylinder 28 be actuated secondly and pushes the exterior end of the swing lever 23, so as to cause the stopper 25 of the swing lever 23 to be swung and displaced in a returning direction of the carrier-combined vice mechanism 15 by a predetermined quantity, as shown by virtual lines in Figs.1 and 2. During such a process, the spring-assistant hydraulic cylinder 30 has no pushing and supporting operation against the swing lever 23 because the head side chamber (lever pushing-assistant side chamber) 43 is communicated with the tank 41 through the fourth pipe line 44 and the third pipe line 38.

Accordingly, in a cutting process of the work stock W, when the carrier-combined vice mechanism 15 is returned by the conveyance-serving hydraulic cylinder 22 while the work stock is being cut with the circular saw, the platform 17 of the carrier-combined vice mechanism 15 comes into contact with the stopper 25 on the swing lever 23 and is stopped at the normal back position Q1 as shown by the solid line in Fig.1. After finishing cutting the work stock, when the main vice mechanism 11 has been loosened, as described above, by actuation of the main vice tight-loose operating hydraulic cylinder 14, and then the stopper 25 on the swing lever 23 is swung and displaced in the returning direction of the carrier-combined vice mechanism 15 by the predetermined quantity by actuation of the spreading hydraulic cylinder 28, the carrier-combined vice mechanism 15 is retreated by a distance S corresponding to the swinging displacement quantity of the stopper 25 to the spreading-associated position Q2 from the normal back position Q1, so that a gap S is formed between the cut face of the work stock W and the saw blade face of the circular saw 12.

After the carrier-combined vice mechanism 15 has been retreated, as described above, to the spreading-associated Q position from the normal back position Q1, the carrier-combined vice mechanism 15 is moved forwardly by the conveyance-serving hydraulic cylinder 22 whereby the work stock W is forwarded by the total (L + S) of the cut length L and the gap S, as shown in Fig .1. Thereafter, the switch valve 39 is shifted to a position c so as to communicate the first pipe line 36 and the second pipe line 37 with the tank 41 and communicate the third pipe line 38 with the oil pressure source 40. In this manner, the pressure oil is discharged from the rod accommodating side chamber 33 of the main vice tight-loose operating hydraulic cylinder 14 and the head side chamber 35 of the spreading hydraulic cylinder 35, whereas the pressure oil is supplied to the head side chamber 34 of the main vice tight-loose operating hydraulic cylinder 14, so that the main vice mechanism 11 is brought into a tight state and the swing lever 23 is returned by the spring 26 to the original position as shown by the solid line.

In such a situation, the head side chamber 43 (lever pushing-assistant side chamber) of the spring-assistant hydraulic cylinder 30 is communicated with the oil pressure source 40 through the fourth pipe line 44 and the third pipe line 38, so that the piston rod 42 projects outwardly and supports the swing lever 23 in cooperation with the spring 26. The spring-assistant hydraulic cylinder 30 has a function to assist the spring 26 to support the swing lever 23. That is, even when a returning force of the carrier-combined vice mechanism 15 exerted by the conveyance-serving hydraulic cylinder 22 gets unexpectedly larger than a pushing and supporting force of the swing lever 23 exerted by the spring 26, the swing lever 23 can be retained at the predetermined position by the spring assistant hydraulic cylinder 30.

In the above-described spreading mechanism, the swing lever 23, the spring 26, the spreading hydraulic cylinder 28, the spring-assistant hydraulic cylinder 30 and the restricting member 31 are arranged on a movable bed (not shown) which is fixed on a desired position along the bench 16 extending toward the moving direction of the carrier-combined vice mechanism 15. If the cut length of the work stock W is changed, the movable bed is slidably adjusted along the bench 16 according to the length to be cut.

To the advantage, in the above-described circular saw machine, the spreading mechanism is arranged to conduct the loosening operation of the main vice mechanism and the spreading operation of the carrier-combined vice mechanism with a hydraulic sequence circuit, so that two different mechanisms can be operated by a single switch valve, to result in a feasibility of control and a remarkable decrease in the production cost.

To the advantage, in the above-described circular saw machine, when the spreading operation on the carrier-combined vice mechanism 15 is. conducted by the spreading-operating hydraulic cylinder 28, the spring-assistant hydraulic cylinder 30 never gives support to the swing lever 23 because its lever pushing-assistant side chamber 43 is communicated with the tank 41 through the fourth pipe line 44. On the other hand, when the lever pushing-assistant side chamber 43 of the spring-assistant hydraulic cylinder 30 is made to communicate with the oil pressure source 40, the spring-assistant hydraulic cylinder 30 supports the swing lever 23 in cooperation with the spring 26. Therefore, the swing lever 23 can be retained at the predetermined position by the spring assistant hydraulic cylinder 30, for example, even when a returning force of the carrier-combined vice mechanism 15 exerted by the conveyance-serving hydraulic cylinder 22 gets unexpectedly larger than a pushing and supporting force of the swing lever 23 exerted by the spring 26.

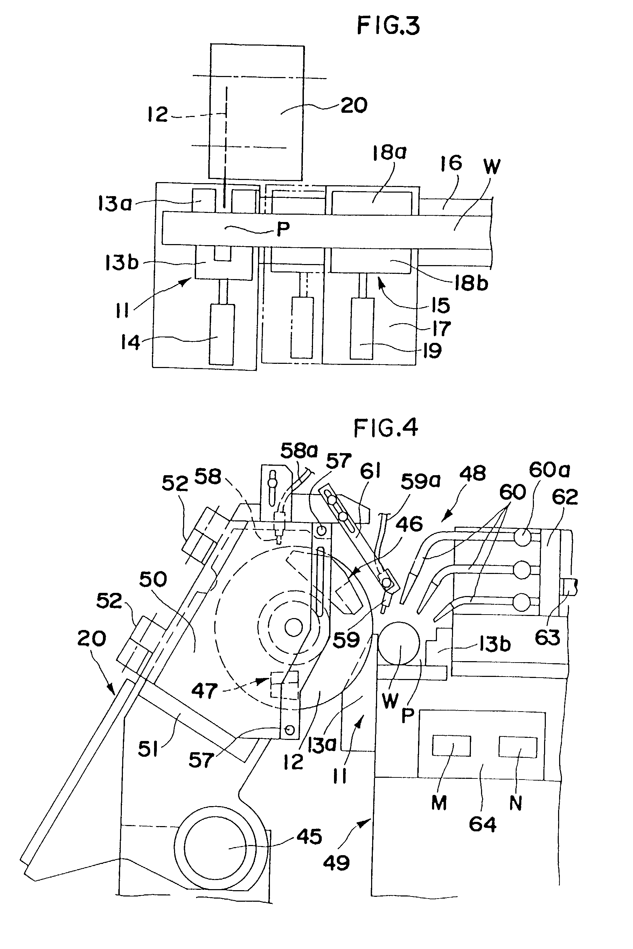

Figs. 3 to 7 show the second embodiment of a circular saw machine according to the present invention, which circular saw machine particularly comprises, in addition to the above-described spreading mechanism, an anti-vibration means for preventing vibration of the circular saw, a motion controlling means adapted to control a motion of an ultimate stage gear of a multistage saw driving unit and thereby prevent a backlash likely to occur between the ultimate stage gear and a penultimate stage gear mating therewith when the circular saw starts to cut the work stock, and a coolant supply means for selectively supplying either of a misty coolant and a fluid coolant to the saw teeth and the work stock.

Generally, for the saw blade used in the circular saw machine, there are adopted a high speed steel saw blade and a cemented-carbide-tip-teethed saw blade. In most cases, the high speed steel saw blade is operated at a cutting speed of 12 to 40 meter per minute, whereas the cemented-carbide-tip-teethed saw blade is operated at a cutting speed of 80 to 120 meter per minute. As such, in case of the high speed steel saw blade, the cutting speed is remarkably slow as compared with the cemented-carbide-tip-teethed saw blade, so that the vibration of the saw blade is little during cutting, and the cutting accuracy is not much reduced by the vibration. On the other hand, in case of the cemented-carbide-tip-teethed saw blade, the cutting speed is very high as being about 100 meter per minute, so that the vibration of the saw blade occurs frequently, and hence there is a need to provide a means for preventing the vibration of the saw blade. In addition, in a circular saw machine using the cemented-carbide-tip-teethed saw blade, severe vibration and impact occurs in the saw blade when the saw blade starts to cut the work stock, because a backlash, between an ultimate stage gear and a penultimate stage gear mating therewith of a saw driving unit, exerts a severe reaction on the saw blade due to the rotation of the saw at the increased high speed as mentioned above. Therefore, the circular saw machine using the cemented-carbide-tip-teethed saw blade needs a means for preventing the backlash at the time of starting to cut. Further, a fluid coolant is used willingly as coolant in the circular saw machine using the high speed steel saw blade, However, in the circular saw machine using the cemented-carbide-tip-teethed saw, a misty coolant is used willingly as coolant because the use of the fluid coolant cools the carbide tip teeth heated by heat generated while cutting and causes damage to the carbide tip teeth.

In this manner, hitherto, two kinds of circular saw machines are required, since the high speed steel saw blade is mounted in one circular saw machine for its exclusive use, whereas the cemented-carbide-tip-teethed saw is mounted in another circular saw machine for its exclusive use. That is, the conventional circular saw machine for exclusive use of the high speed steel saw blade do not need the above-mentioned anti-vibration means and the backlash preventing means and is equipped with the fluid coolant supply means suited to the high speed steel saw blade, whereas the circular saw machine exclusive for the cemented-carbide-tip-teethed saw is equipped with the anti-vibration means, the backlash preventing means and the misty coolant supply means. Thus, in the practical cutting processing, use must is made properly of either the high speed steel saw blade or the cemented-carbide-tip-teethed saw blade depending upon different kinds of work stocks, but the installation of the both kinds of circular saw machines is accompanied with an increased cost of equipment.

Accordingly, a novel circular saw machine shown in Figs. 3 - 7 is provided as a solution of the above-described problem, and can use the high-speed steel saw and the cemented-carbide-tip-teethed saw optionally in one saw machine. This circular saw machine is described hereinafter in details, but elements and portions corresponding to those of the above-described circular saw machine shown in Figs. 1 and 2 are designated by the similar numerals with the detailed description thereof being omitted.

Fig.3 shows a circular saw machine schematically, having a substantially similar structure as the circular saw machine shown in Fig.1, with the spreading mechanism omitted for simplicity. A circular saw 12 is installed on a swing type saw frame 20 as shown in Fig.4, which saw frame 20 is supported swingably on a support shaft 45 so that the circular saw 12 mounted on a free part of the frame can be put nearer to and away from a work stock W held by a main vice mechanism 11.

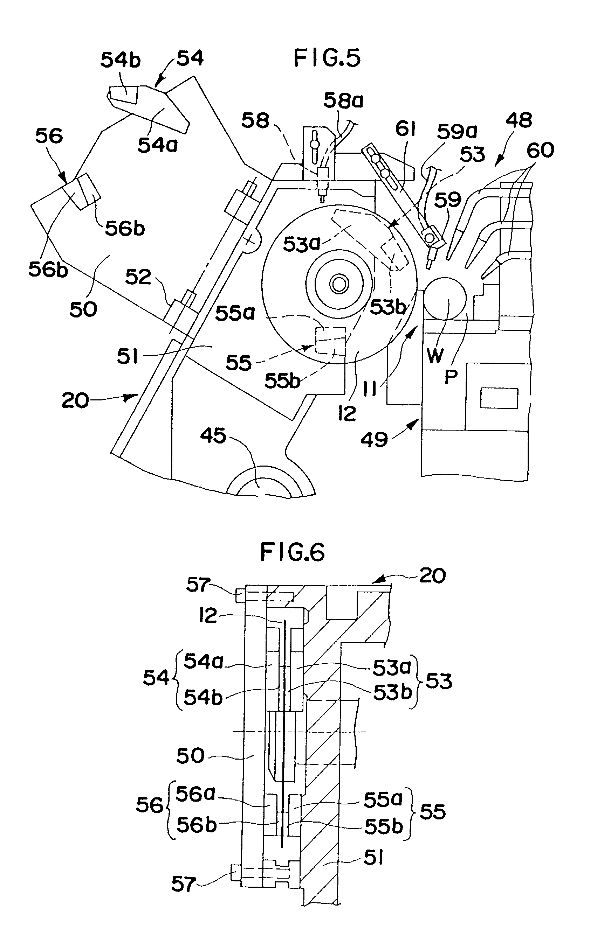

In Figs.4 and 5, numerals 46 and 47 both designate anti-vibration means provided on the saw frame 20, and numeral 48 designates coolant supply means provided on the saw frame 20 and on a base 49 of the main vice mechanism 11. Numeral 50 designates a cover plate which is disposed to face to a frame body 51 with the circular saw 12 interposed therebetween, and is connected with the frame body 51 by hinges 52 capably of opening outwardly. Fig.4 shows a state where the cover plate 50 is closed, and Fig.5 shows a state where the cover plate 50 is opened.

The anti-vibration means 46 comprises a pair of anti-vibration blocks 53, 54 arranged to both lateral sides of an outer peripheral portion of the circular saw 12 so as to face to one another with the circular saw interposed therebetween, whereas another anti-vibration means 47 also comprises a pair of anti-vibration blocks 55, 56 arranged to both lateral sides of the outer peripheral portion of the circular saw 12 but at a position duly remote circumferentially from the above-mentioned anti-vibration means 46 so as to face to one another with the circular saw interposed therebetween. For both the anti-vibration means 46, 47, the anti-vibration blocks 53, 55 in one lateral side of the circular saw 12 are mounted, as shown in Figs.5 and 6, on the frame body 51 of the saw frame 20, whereas the anti-vibration blocks 54, 56 in the other lateral side are mounted on the releasable cover plate 50. These anti-vibration blocks 53, 54, 55 and 56 each includes support plates 53a, 54a, 55a and 56a, and buffers 53b, 54b, 55b and 56b secured to inward sides of the support plates and serving for performing substantial anti-vibration operation, which buffers 53b, 54b, 55b and 56b are arranged with a narrow gap (not shown) in reference to the circular saw 12. In Fig.6, numeral 57 designates bolts for tightening the cover plate 50 to the frame body 51 in a closed position.

The provision of the above-mentioned anti-vibration means 46, 47 on the saw frame 20 enables restraint from vibration likely to occur during a high speed of rotation in the case where the cemented-carbide-tip-teethed saw is used for the circular saw 12. Also, even in the case where the high speed steel saw is used for the circular saw 12, the anti-vibration means 46, 47 enables restraint from vibration likely to occur in the circular saw 12 of a fairly large diameter or of a thickness having a relatively small measurement as compared with the diameter.

As shown in Figs.4 and 5, the coolant supply means 48 comprises a plurality of mist nozzles 58, 59 for supplying a misty coolant to the circular saw 12 and the work stock W, and a plurality of fluid nozzles 60 for supplying a fluid coolant, and is constructed so that either of the mist nozzles 58, 59 and the fluid nozzles 60 can be used selectively. As evident from Figs. 4 and 5, one 58 of the mist nozzles are mounted on an upper end portion of the frame body 51 of the saw frame 20 toward a peripheral edge of the circular saw 12, while the other mist nozzle 59 is mounted on a free end of an attachment arm 61, which is secured to the frame body 51, toward the cutting portion P of the work stock adjustably of an inclination angle. Each of the mist nozzles 58, 59 is connected to a mist supply source (not shown) through mist supply pipe lines 58a, 59a. The plurality of fluid nozzles 60 each have a cock 60a and are oriented toward the cutting portion P of the work stock and connected to a fluid coolant distributor 62 which is provided on the base 49 of the main vice mechanism 11. The fluid coolant distributor 62 is connected further to a fluid coolant supply source (not shown) through a fluid coolant supply pipe line 63.

The mist supply pipe lines 58a, 59a have a control valve ( not shown ) at their longitudinal midway, while the fluid coolant supply pipe line 63 is communicated with the fluid coolant supply source. For selective use of either the mist nozzles 58, 59 or the fluid nozzles 60, operative switches M, N are provided, as shown in Fig.4, on a control panel 64 fixed on the base 49. The switch M on the control panel 64 is a selective switch for the mist, and the switch N is a selective switch for the fluid. Accordingly, where using the cemented-carbide-tip-teethed saw for the circular saw 12, the operating of the switch M enables the mist nozzles 58, 59 to supply only the misty coolant to the circular saw 12 and the cutting portion P of the work stock W. Where using the high speed steel saw for the circular saw 12, the operating of the switch N enables the fluid nozzles 60 to supply only the fluid coolant to the circular saw 12 and the cutting portion P of the work stock W.

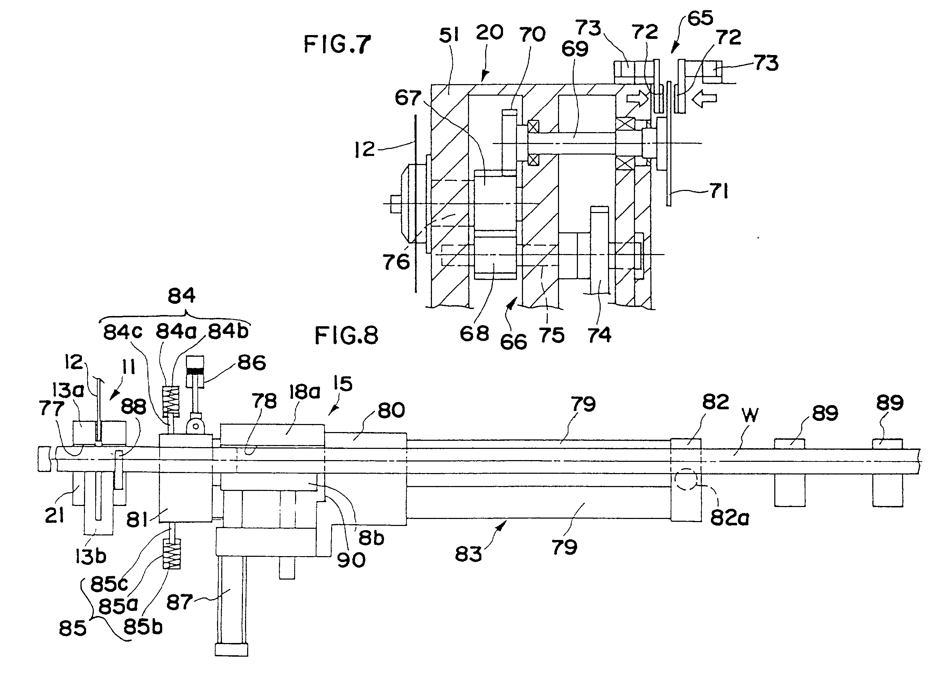

Fig.7 shows motion controlling means 65 for prevention of a backlash, which motion controlling means is adapted to control a motion of an ultimate stage gear 67 of a multistage saw driving unit 66 and thereby prevent a backlash likely to occur between the ultimate stage gear 67 and an penultimate stage gear 68 mating with one another when the circular saw starts to cut the work stock W. The motion controlling means 65 comprises a brake gear 70 which is fixed on one end of a brake shaft 69 sustained on the frame body 51 of the saw frame 20 so as to mate with the ultimate stage gear 67 of the saw driving unit 66, a brake disc 71 fixed on the other end of the brake shaft 69, a pair of motion controlling pieces 72, 72 arranged in a mutually facing manner to both sides of the brake disc 71, and a brake-operating cylinder 73 for driving the motion controlling pieces 72, 72 onto both sides of the brake disc 71 so as to sandwich tightly requisite peripheral portions thereof. During the rotation of the circular saw 12 due to the saw driving unit 66, the brake shaft 69 is rotated by the brake gear 70 mating with the ultimate gear 67, in which an actuation of the brake-operating cylinder 73 causes the brake pieces 72, 72 to come into contact with the brake disc 71 so that a motion controlling force is exerted on the brake shaft 69 and a motion of the penultimate stage gear 68 is controlled through the ultimate stage gear 67. The saw driving unit 66 comprises a motor (not shown), a gear 74 rotated by the motor, an intermediate transmission shaft 75 integrated coaxially with the gear 74, a gear 68 ( a penultimate stage side gear) fixed on the intermediate shaft 75 and an ultimate stage gear 67 mating with the penultimate stage gear 68, the ultimate stage gear 67 formed integrally with a driving shaft 76.

Thus, where the motion controlling means 65 is actuated when the circular saw 12 rotated by the saw driving unit 66 is approached to the cutting portion P of the work stock W by swinging the saw frame 20, a motion of the penultimate stage side gear 68 is controlled through the ultimate stage gear 67, so that a backlash is prevented between both the gears 67, 68. Due to such prevention of the backlash, there is no likelihood of vibration and impact in the circular saw 12 when the saw 12 cut through into the work stock W. As a result, when the cemented-carbide-tip-teethed saw is used for the circular saw 12 and is rotated at a high speed, the motion controlling means 65 functions effectively.

To the advantage, in the above-described circular saw machine, when the cemented-carbide-tip-teethed saw is used for the circular saw 12, the likelihood of vibration of the circular saw during a high speed of rotation can be restrained by the anti-vibration means 46, 47. In addition, with the motion controlling means 65, a backlash is prevented between the ultimate stage gear and the penultimate stage gear mating therewith of the multistage saw driving unit when the circular saw starts to cut the work stock, so that the likelihood of vibration, shock and noise can be restrained. In addition, where using the cemented-carbide-tip-teethed saw for the circular saw 12, the misty coolant can be supplied of the selective use of the mist nozzles 58, 59, and, where using the high speed steel saw for the circular saw 12, the fluid coolant can be supplied by the selective use of the fluid nozzles 60. Therefore, there is no need of two kinds of circular saw machines, i.e. the circular saw machine for exclusive use of the high speed steel saw blade and the circular saw machine for exclusive use of the cemented-carbide-tip-teethed saw. That is, the high-speed steel saw and the cemented-carbide-tip-teethed saw can be used optionally in one saw machine, so that a required cost can be reduced.

Figs. 8 to 10 show the third embodiment of a circular saw machine according to the present invention, which is designed to never cause damage to the work stock by keeping the work stock from coming into contact with a side reference face of the main vice mechanism or the carrier-combined vice mechanism when the carrier-combined vice mechanism is moved forwardly from a rearmost position to a foremost position while holding the work stock, or when the carrier-combined vice mechanism in the foremost position, after releasing a cut part of the work stock while the remaining work stock is held in the main vice mechanism, is returned to the rearmost position.

For reference, one example of conventional circular saw machines is described with reference to Figs.14 - 20. A main vice mechanism 11 is disposed at a cutting course of a circular saw 12, and there is set in a rearer location a carrier-combined vice mechanism 15 for forwarding a work stock W fed on support of support rollers 89 from downstream by a predetermined distance so that a forwarded part of the work stock can be cut with the saw, which carrier-combined vice mechanism is adapted to move to and fro between a predetermined stroke.

As understood more clearly from Fig.19, the main vice mechanism 11 comprises a fixed vice jaw 13a which is formed integral with a base 21 for sustaining the work stock W and has a reference side face 77 for supporting a lateral side face of the work stock W, a movable vice jaw 13b adapted to move laterally toward and away from the fixed vice jaw 13a, and a movable vice jaw 88 adapted to move vertically in reference to an upper surface of the base 21. The carrier-combined vice mechanism 15 has a configuration similar to the main vice mechanism 11 and comprises a base 90 for sustaining the work stock W, a fixed vice jaw 18a formed integrally with the base 90 and having a reference side face 78 for supporting the lateral side face of the work stock W, a movable vice jaw 18b adapted to move laterally toward and away from the fixed vice jaw 18a, and a vice tight-loose operating cylinder 87 associated with the movable vice jaw 18b. The carrier-combined vice mechanism 15 is mounted on a slide platform 80 which is adapted to move slidably along a pair of parallel guide rails 79, 79 extending in a carrying direction of the work stock W, the slide platform 80 being associated with proper drive means such as ball-screws.

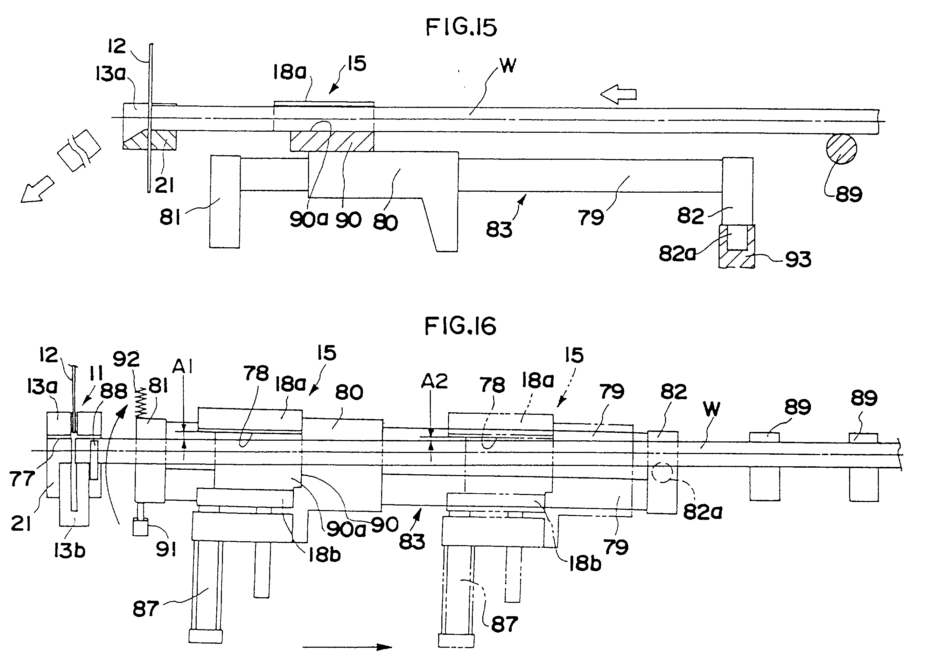

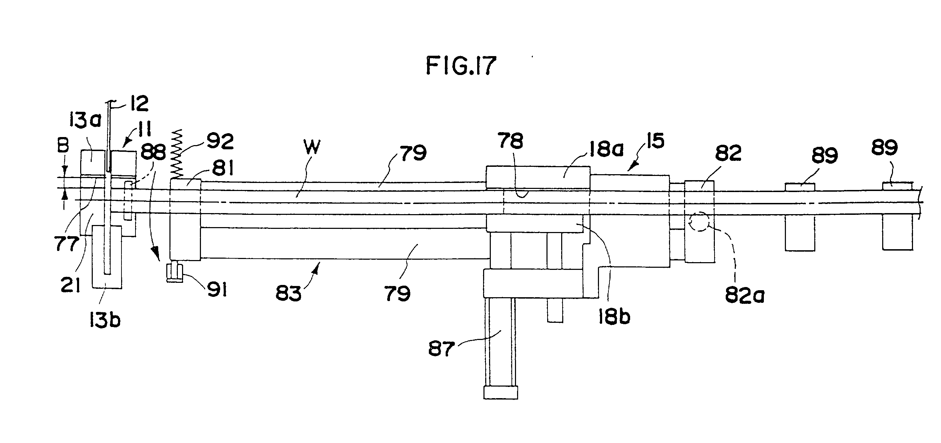

The guide rails 79, 79 forms a guide frame 83 together with a pair of front and rear side blocks 81, 82 connecting between the ends on the same side of the guide rails 79,79. The guide frame 83 is supported pivotably on a floor side support 93 with a vertical pivot 82a which is projected downwardly from the middle of the bottom of the rear side block 82, so as to be swung horizontally about the vertical pivot 82a. This means that, with the swinging motion of the guide frame, the carrier-combined vice mechanism 15 also can be horizontally swung about the vertical pivot 82a. On an unrestrained end side of the guide frame 83, a laterally actuating cylinder 91 and a laterally pushing spring 92 are arranged opposedly to both lateral sides of the front side block 81, whereby the guide frame 83 is displaced in a direction of an arrow shown in Fig.16 about the vertical pivot 82a when the laterally actuating cylinder 91 is outwardly projected longer against a biasing force of the laterally pushing spring 92, or is displaced in a direction of an arrow shown in Fig.17 by the biasing or pushing force of the spring 92 when the cylinder 91 is inwardly retracted.

The cutting operation of the above-constructed saw machine toward the work stock is achieved as follows. Figs.14 and 15 show a state of the saw machine where the cutting due to the circular saw 12 begins while the main vice mechanism 11 holds the work stock W in a tightened manner and the carrier-combined vice mechanism 15 in the foremost position also holds the work stock W in a tightened manner. In such a state, the guide frame 83 is located at a neutral position where the work stock W is in contact with the reference side faces 77, 78 of the main vice mechanism 11 and the carrier-combined vice mechanism 15 (see Fig.14). When the cutting-off is finished as shown in Fig.16, the main vice mechanism 11 keeps holding a remaining part of the work stock W, and the carrier-combined vice mechanism 15 is returned to a rearmost position as shown by a virtual line after its own movable vice jaw 18b has been loosened away from the work stock W. Before the carrier-combined vice mechanism 15 is returned, the guide frame 83 is displaced in the direction of the arrow about the vertical pivot 82a by the outwardly projecting motion of the laterally actuating cylinder 91, and at the same time the carrier-combined vice mechanism 15 is caused to move laterally in reference to a forwarding course of the work stock, so that a gap is formed between the reference side face 78 of the fixed vice jaw 18a of the carrier-combined vice mechanism 15 and the lateral side face of the work stock W ( a relatively wide gap A1 being formed near the foremost position, and a relatively narrow gap A2 being formed near the rearmost position ). Accordingly, when the carrier-combined vice mechanism 15 is returned from the foremost position shown by the solid line in Fig.16, toward the rearmost position shown by the virtual line, the carrier-combined vice mechanism 15 never causes damage to the work stock W because its own reference side face 78 comes into no sliding contact with the work stock W.

Next, the carrier-combined vice mechanism 15, which was returned to the rearmost position as shown in Fig.17, is moved forwardly to the foremost position while the work stock W is sandwiched and held tightly between the fixed vice jaw 18a and the movable vice jaw 18b, whereas the main vice mechanism 11 is loosened away from the work stock W. On moving forwardly the carrier-combined vice mechanism 15 by a predetermined stroke while holding the work stock W, the guide frame 83 is pushed by the biasing force of the spring 92 on the opposite side of the cylinder 91 which is put in a free state, and is displaced in the direction of the arrow shown in Fig.17 about the vertical pivot 82a, and at the same time the carrier-combined vice mechanism 15 holding the work stock W is swung in the same direction together with the work stock W, so that a gap B gets formed between the reference side face 77 of the fixed vice jaw 13a of the main vice mechanism 11 and the lateral side face of the work stock W to be forwarded, as shown in Figs.17 and 19. Accordingly, when the carrier-combined vice mechanism 15 is moved forwardly from the rearmost position in Fig.17 to the foremost position for cutting the work stock, the forwarded work stock W is prevented from coming into contact with the reference side face 77 of the main vice mechanism 11 so as to avoid suffering damage therefrom.

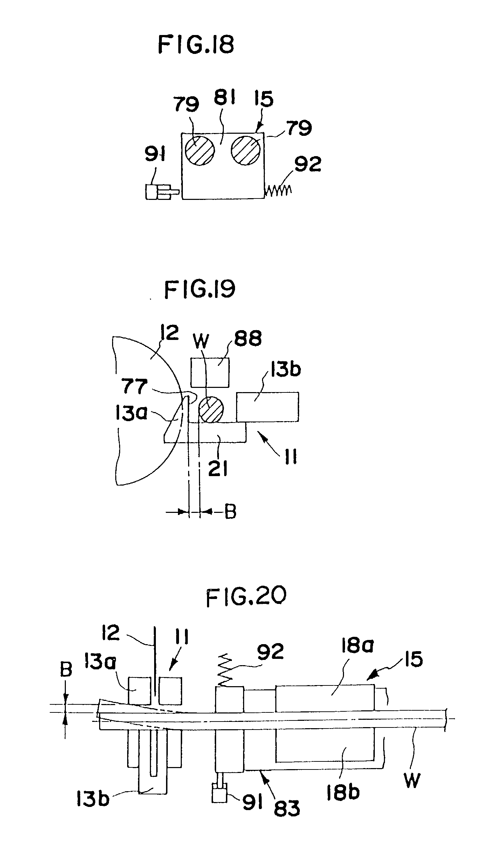

Next, in such a manner that the carrier-combined vice mechanism 15 is put in the foremost position and the lateral side face of the forwarded work stock W has the gap B in reference to the reference side face 77 of the main vice mechanism 11, the main vice mechanism 11 is tightened so as to sandwich closely the forwarded work stock W while the work stock W is held in the carrier-combined vice mechanism 15 associated with the guide frame 83, wherein such tightening operation ( particularly, due to a pressure of the movable vice jaw 13b of the main vice mechanism 11 toward the forwarded work stock W ) causes the unrestrained end side of the guide frame 83 to move to the side of the reference side face 77 by way of the work stock W. However, in a case where the work stock W is of a relatively small diameter, there is a likelihood that the work stock forwarded to the main vice mechanism 11 is bent, as shown by a virtual line in Fig.20, laterally from a position in which the carrier-combined vice mechanism 15 holds the work stock W, so that the side face of the forwarded work stock suffers damage due to collision with the fixed vice jaw 13a.

That is, when the guide frame 83 is moved to the side of the reference side face 77 by the tightening operation of the main vice mechanism 11 toward the forwarded work stock W by way of the work stock W and the carrier-combined vice mechanism 15, the guide frame 83 is subjected to the opposite operation by the pushing force of the laterally pushing spring 92 acting on the unrestrained end side of the guide frame 83, so that the lateral movement of the work stock W to the reference side face 77 meets the opposite force from the laterally pushing spring 92 in a position where the carrier-combined vice mechanism 15 holds the work stock W. Due to the opposite force from the laterally pushing spring 92 and the pressure force from the movable vice jaw 13b toward the work stock W, the work stock W is deformed like an arch to the end, as shown by a virtual line in Fig.20, so that the side face of the forwarded work stock suffers damage due to collision with the fixed vice jaw 13a.

Accordingly, the novel circular saw machine shown in Figs. 8 to 10 is provided as a solution of the above-described problem, and is particularly described hereinafter, but elements and portions corresponding to those of the conventional circular saw machine shown in Figs.14 through 20 are designated by the same numerals with the description thereof being simplified or omitted.

As shown in Figs. 8 to 10, to both lateral sides of a front block 81 of an unrestrained end side of a guide frame 83 which is swingable horizontally about the vertical pivot 82a, there are arranged a pair of spring means 84, 85 at opposed positions on the right and left sides, which are adapted for supporting the guide frame 83 at a neutral position (see Fig.8) where the work stock W is in contact with the reference side faces 77, 78 of the main vice mechanism 11 and the carrier-combined vice mechanism 15. In addition, to one lateral side of the front block 81 of the guide frame 83, particularly on the side of one spring means 84, an actuating cylinder 86 is arranged for displacing laterally the unrestrained end portion of the guide frame 83, and is interconnected to the front block.

The actuating cylinder 86 is of an air cylinder type, and is designed to cause the guide frame 83 to swing laterally about the vertical pivot 82a against the biasing force of the spring means 84 or 85 by pushing or pulling laterally the unrestrained end of the guide frame 83 so that the guide frame 83 can be displaced relative to the neutral position, either to a first displacement position where the reference side face 78 of the carrier-combined vice mechanism 15 comes apart from the work stock W, or to a second displacement position where the work stock W comes apart from the reference side face 77 of the main vice mechanism 11.

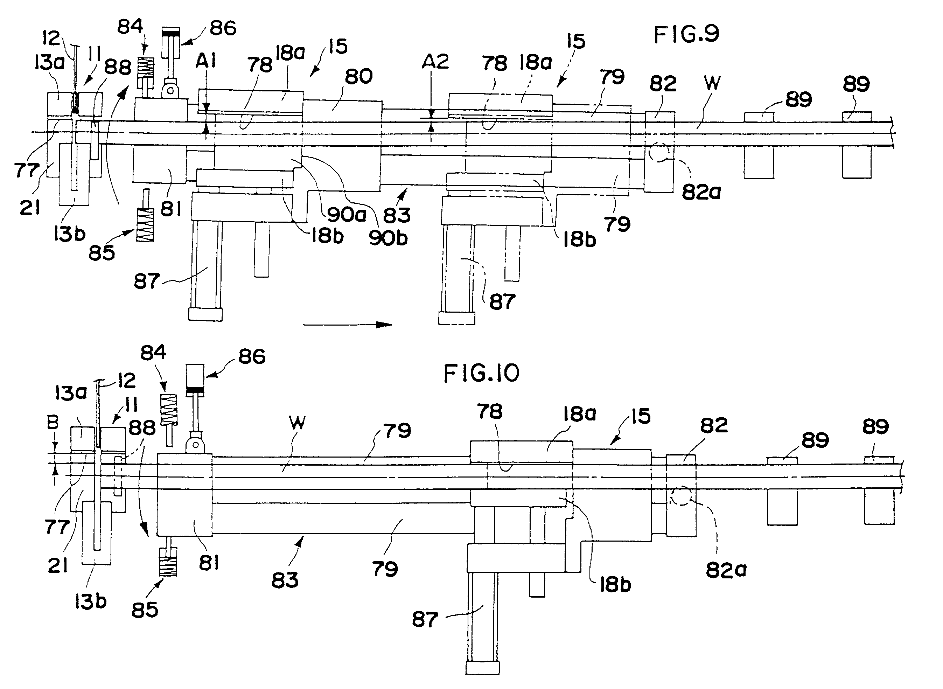

The spring means 84, 85 each comprises a cylindrical casing 84a, 85a, a coiled spring 84b, 85b confined within the casing 84a, 85a and a thrust rod 84c, 85c interconnected to the coil springs 84b, 85b so as to exert a thrust on the front block 81 of the guide frame 83. In this manner, when the guide frame 83 is put at the first displacement position, as shown in Fig.9, where the reference side face 78 of the carrier-combined vice mechanism 15 comes apart from the work stock W, the spring means 84 on one lateral side toward which the guide frame is displaced is compressed by a pulling action of the actuating cylinder 86, while the spring means 85 on the opposite lateral side is idle relative to the guide frame 83. Similarly, at the second displacement position of the guide frame 83, as shown in Fig.10, where the work stock W comes apart from the reference side face 77 of the main vice mechanism 11, the spring means 85 on the opposite lateral side toward which the guide frame 83 is displaced is compressed by the pushing action of the actuating cylinder 86, while the spring means 84 on one lateral side from which the guide frame 83 goes away is idle relative to the guide frame 83.

The cutting operation of the above-constructed saw machine toward the work stock is achieved as follows. Fig.8 shows a state of the saw machine where the cutting due to the circular saw 12 begins while the main vice mechanism 11 holds the work stock W in a tightened manner and the carrier-combined vice mechanism 15 in the foremost position also holds the work stock W in a tightened manner. In such a state, the guide frame 83 is supported by the spring means 84,85 on both the sides and maintained at a neutral position where the work stock W is in contact with the reference side faces 77, 78 of the main vice mechanism 11 and the carrier-combined vice mechanism 15. In this manner, the actuating cylinder 86 is inactive while a piston is stopped midway.

When the cutting-off is finished as shown in Fig.9, the main vice mechanism 11 keeps holding a remaining part of the work stock W, and the carrier-combined vice mechanism 15 is returned to a rearmost position as shown by a virtual line after its own movable vice jaw 18b has been loosened away from the work stock W. Before the carrier-combined vice mechanism 15 is returned, the guide frame 83 is displaced in the direction of the arrow about the vertical pivot 82a from the neutral position to the first displacement position by the retracting motion of the actuating cylinder 91, and at the same time the carrier-combined vice mechanism 15 is caused to move laterally in reference to a forwarding course of the work stock, so that a gap is formed between the reference side face 78 of the fixed vice jaw 18a of the carrier-combined vice mechanism 15 and the lateral side face of the work stock W ( a relatively wide gap A1 being formed near the foremost position, and a relatively narrow gap A2 being formed near the rearmost position ). In this manner, the spring means 84, on one lateral side toward which the guide frame is displaced from the neutral position, is compressed by a pulling action of the actuating cylinder 86, while the spring means 85 on the opposite lateral side is idle relative to the guide frame 83. Accordingly, when the carrier-combined vice mechanism 15 at the first displacement position of the guide rail 83 is returned from the foremost position shown by the solid line in Fig.16, toward the rearmost position shown by the virtual line, the carrier-combined vice mechanism 15 never causes damage to the work stock W because its own reference side face 78 comes into no sliding contact with the work stock W.

Next, the carrier-combined vice mechanism 15, which was returned to the rearmost position as shown in Fig.10, is moved forwardly to the foremost position while the work stock W is sandwiched and held tightly between the fixed vice jaw 18a and the movable vice jaw 18b, whereas the main vice mechanism 11 is loosened away from the work stock W. On moving forwardly the carrier-combined vice mechanism 15 by a predetermined stroke while holding the work stock W, the guide frame 83 is thrust laterally by the outwardly projecting motion of the actuating cylinder 86, and is displaced in the direction of the arrow shown in Fig.10 about the vertical pivot 82a from the first displacement position to the second position, and at the same time the carrier-combined vice mechanism 15 holding the work stock W is swung in the same direction together with the work stock W, so that a gap B gets formed between the reference side face 77 of the fixed vice jaw 13a of the main vice mechanism 11 and the lateral side face of the work stock W to be forwarded. In this manner, the spring means 85, on the opposite lateral side toward which the guide frame 83 is displaced from the first displacement, is compressed by the pushing action of the actuating cylinder 86, while the spring means 84 on one lateral side from which the guide frame 83 goes away is idle relative to the guide frame 83. Accordingly, when the carrier-combined vice mechanism 15 at the second displacement position of the guide frame 83 is moved forwardly from the rearmost position in Fig.17 to the foremost position for cutting the work stock, the forwarded work stock W is prevented from coming into contact with the reference side face 77 of the main vice mechanism 11 so as to avoid suffering damage therefrom.

Next, while the work stock W is held in the carrier-combined vice mechanism 15 moved to the frontmost position, the main vice mechanism 11 is tightened so as to sandwich closely the forwarded work stock W prior to cutting , wherein such tightening operation ( particularly, due to a pressure of the movable vice jaw 13b of the main vice mechanism 11 toward the forwarded work stock W ) causes the unrestrained end side of the guide frame 83 to move laterally from the second displacement position to the neutral position by way of the work stock W, wherein the spring means 84 on one lateral side where the actuating cylinder 86 exits is idle relative to the guide frame 83, and the actuating cylinder 86 is put in an inactive state. Therefore, the guide frame 83 is moved laterally in a smooth manner without being subjected to an opposite force from the spring means 84 and the actuating cylinder 86 in a position where the carrier-combined vice mechanism 15 holds the work stock W. As a result of it, in a case where the work stock W is of a relatively small diameter, there is no likelihood that the work stock forwarded to the main vice mechanism 11 is bent, as in the conventional circular saw machine, laterally from a position in which the carrier-combined vice mechanism 15 holds the work stock W, so that the side face of the forwarded work stock never suffers damage due to collision with the fixed vice jaw 13a.

In the circular saw machine, since the spring means 84, 85 are constituted by cylindrical casings 84a, 85a, coil springs 84b, 85b inserted into the casings 84a, 85a and contact pieces 84c, 85c connected to the coil springs 84b, 85b and contacting to the unrestrained end of the guide frame 83, a proper spring action can be exerted on the guide frame 83. Also, since the push-and-pull cylinder 23 is consisting of an air cylinder, as compared with the case of using a hydraulic cylinder in the push-and-pull cylinder 23, a complicated piping is not necessary and the push-and-pull action of the guide frame 83 as well as switching the cylinder to a neutral position can be performed rapidly, and at the same time, the impact on the cylinder stroke end can be relaxed by a cushion action peculiar to the air cylinder.

To the advantage, in the above-described circular saw machine, the spring operation can be conducted duly on the guide frame 83 by the arrangement in which the spring means 84, 85 each comprises a cylindrical casing 84a, 85a, a coiled spring 84b, 85b confined within the casing 84a, 85a and a thrust rod 84c, 85c interconnected to the coil springs 84b, 85b so as to exert a thrust on the front block 81 of the guide frame 83.

## Claims

1. A circular saw machine comprising,
a circular saw (2) for cutting a work stock (W) crosswise,
a main vice mechanism (1) adapted to hold a work stock at front and rear positions relative to a crosswise cutting course of the circular saw,
a carrier-combined vice mechanism (5) adapted to hold the work stock and forward the work stock partially over the sawing course of the circular saw,
anti-vibration means (12,13) which comprises a pair of anti-vibration blocks (19,20;21,22) arranged to both lateral sides of the circular saw so as to face to one another with the circular saw interposed therebetween, and
motion controlling means (31) , for prevention of a backlash, which is adapted to control a motion of an ultimate stage gear (33) of a multistage saw driving unit (32) and thereby prevent a backlash likely to occur between the ultimate stage gear and an penultimate stage gear (34) mating therewith when the circular saw starts to cut the work stock.

2. A circular saw machine in accordance with claim 1, further comprising coolant supply means (14) which comprises one or more mist nozzles (24,25) for supplying a misty coolant to the circular saw and the work stock, and one or more fluid nozzles (26) for supplying a fluid coolant, and is constructed so that either of the mist nozzles and the fluid nozzles can be used selectively.
